# FASCICULE DE BREVET EUROPEEN

(11) **EP 2 820 766 B1**
(45) Date de publication et mention de la délivrance du brevet: **18.07.2018**
(21) Numéro de dépôt: 13706545.4
(22) Date de dépôt: 28.02.2013
(51) Int. Cl.: H04B 3/56, G05F 1/10, H04B 3/54, G08C 19/00

(54) **DISPOSITIF DE MODULATION-DEMODULATION DESTINE A EMETTRE ET RECEVOIR DES DONNEES SUR UNE LIGNE HAUTE TENSION**
MODULATIONS-DEMODULATIONS-VORRICHTUNG ZUM SENDEN UND EMPFANGEN VON DATEN AUF EINER HOCHSPANNUNGSLEITUNG
MODULATION-DEMODULATION DEVICE INTENDED FOR SENDING AND RECEIVING DATA ON A HIGH-VOLTAGE LINE

(30) Priorité: 29.02.2012 FR 1251838
(43) Date de publication de la demande: 07.01.2015
(73) Titulaire: Sagemcom Energy & Telecom SAS, 92500 Rueil-Malmaison (FR)
(72) Inventeur: DUTHEIL, Michel, F-92500 Rueil Malmaison (FR)
(74) Mandataire: Lavialle, Bruno François Stéphane
(86) Numéro de dépôt international: PCT/EP2013/054010
(87) Numéro de publication internationale: WO 2013/127909

(56) Documents cités:
- EP-A1- 1 322 047
- EP-A1- 1 351 409
- DE-A1-102010 029 219
- US-A1- 2003 218 550

## Description

L'invention a pour objet un dispositif de modulation-démodulation destiné à émettre et recevoir des données sur un canal de transmission.

### ARRIERE PLAN DE L'INVENTION

La technologie de communication par Courant Porteur en Ligne (CPL) consiste à utiliser des lignes électriques existantes du réseau de distribution électrique pour émettre et recevoir des données numériques. On distingue généralement le CPL « bas débit », transmettant des données à une fréquence comprise entre quelque kilohertz (kHz) et 150 kHz environ, et le CPL « haut débit », transmettant des données à une fréquence comprise entre 1 mégahertz (MHz) et 30 MHz environ. Un signal électrique de données contenant ces données numériques est superposé au courant alternatif (de fréquence 50 Hertz en France) transporté par les lignes du réseau.

Le signal électrique de données peut circuler aussi bien sur des lignes HTA (haute tension A), transportant une tension entre 1 kilovolt (kV) et 50 kV, que sur des lignes BT (basse tension), transportant une tension inférieure à 500 Volts.

Pour émettre ou recevoir le signal électrique de données, on connecte à la ligne électrique un appareil modulateur-démodulateur (modem). En émission, le modem génère, à partir des données numériques, un signal analogique, de type fréquence porteuse modulée par exemple, qui est injecté sur la ligne électrique. En réception, le modem démodule le signal analogique pour récupérer les données numériques du signal d'origine.

Pour connecter un modem au réseau électrique, il est donc nécessaire de prévoir, en plus de moyens pour alimenter électriquement le modem, des moyens pour coupler le modem à la ligne électrique.

Dans le cas où la ligne est une ligne HTA, on connecte généralement le modem à une ligne électrique BT pour l'alimenter via un boîtier d'alimentation classique. Ceci nécessite, d'une part, qu'une ligne BT soit disponible à proximité des appareils électriques et, d'autre part, de raccorder le boîtier d'alimentation à la ligne BT.

Pour coupler le modem à la ligne HTA, on utilise généralement un condensateur ainsi que d'autres éléments, par exemple un système de protection contre la foudre, un transformateur d'impédance, etc.

Ainsi, l'installation d'un modem nécessite d'une part qu'une ligne BT soit disponible à proximité du modem et, d'autre part, d'utiliser un nombre important d'équipements, ce qui rend l'installation à la fois encombrante et coûteuse.

### OBJET DE L'INVENTION

L'invention a pour objet de simplifier la connexion d'un modem à un réseau électrique.

### RESUME DE L'INVENTION

En vue de la réalisation de ce but, on propose un dispositif de modulation-démodulation destiné à émettre et recevoir des données sur un canal de transmission, le dispositif étant connecté au canal de transmission par une ligne additionnelle, le dispositif comportant une unité de traitement de signal reliée à au moins une unité d'alimentation et à des moyens de couplage entre l'unité de traitement du signal et le canal de transmission. Selon l'invention, les moyens de couplage comprennent un étage d'entrée de l'unité d'alimentation.

Ainsi, le dispositif de modulation-démodulation comprend à la fois une unité d'alimentation et des moyens de couplage connectés sur une seule ligne additionnelle elle-même reliée au canal de transmission, ce qui évite de devoir relier le modem à une ligne basse tension. En outre, le dispositif permet de mettre en commun des éléments constitutifs de l'unité d'alimentation et des moyens de couplage, ce qui permet de simplifier l'installation du modem.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :
- la figure 1 représente schématiquement un agencement particulier du dispositif de modulation-démodulation selon l'invention,
- la figure 2 représente deux unités d'alimentation du dispositif de l'invention connectées à une ligne additionnelle,
- la figure 3 représente une cellule de filtrage d'une unité d'alimentation du dispositif de l'invention.

### DESCRIPTION DETAILLEE DE L'INVENTION

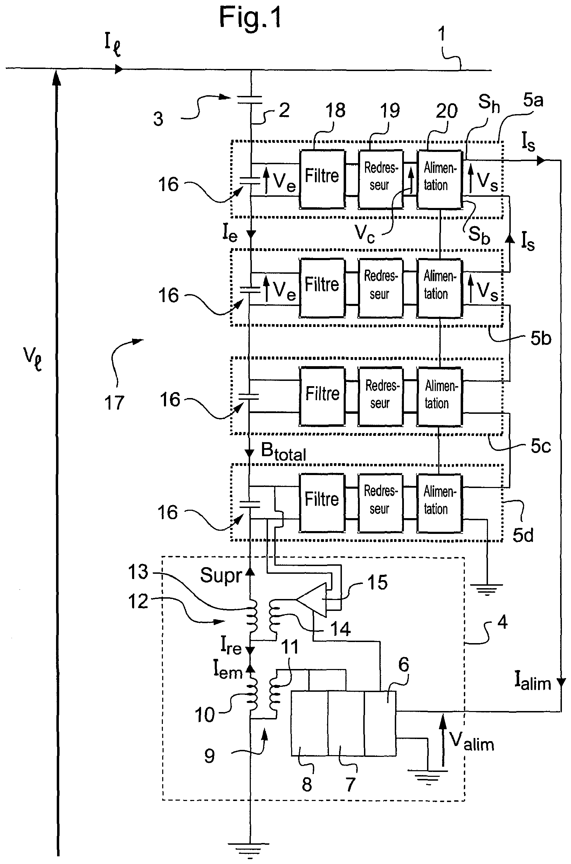

En référence à la figure 1, le dispositif de modulation-démodulation de l'invention est ici utilisé pour mettre en oeuvre une communication CPL bas débit dans la bande de fréquence [30 kHz ; 95 kHz] sur une ligne électrique HTA 1, transportant une tension alternative de ligne Vl de tension efficace égale à 12kV.

Le dispositif de modulation-démodulation est connecté à une ligne additionnelle 2, elle-même reliée à la ligne HTA 1 via un composant de ligne, ici une capacité de ligne 3. Le dispositif comporte un modem 4 et quatre unités d'alimentation 5 alimentant le modem 4.

Le modem 4 comprend une unité de traitement du signal 6, connue en elle-même, ayant un étage émetteur 7 et un étage récepteur 8.

Le modem 4 comprend également un premier transformateur 9 et un second transformateur 12 à enroulements. Le premier transformateur 9 comporte un enroulement primaire 10 connecté à la ligne additionnelle 2 et un enroulement secondaire 11 connecté à l'étage émetteur 7 et à l'étage récepteur 8. Le second transformateur 12 comporte un enroulement primaire 13 connecté à la ligne additionnelle 2 et un enroulement secondaire 14 connecté à l'unité de traitement 6 via un étage d'amplification 15.

En émission, un courant analogique contenant les données à émettre est généré par l'étage émetteur 7 sur l'enroulement secondaire 11 du premier transformateur 9, créant un signal de données Iem sur la ligne additionnelle 2. Le signal de données Iem est ainsi transmis à la ligne HTA via la capacité de ligne 3. En réception, un signal de données Ire circulant sur la ligne HTA est transmis à la ligne additionnelle 2 et à l'enroulement primaire 10 du premier transformateur 9 via la capacité de ligne 3. Une image de ce courant circule alors dans l'enroulement secondaire 11 du premier transformateur 9 pour être démodulé par l'étage récepteur 8.

Le modem 4 est alimenté par les quatre unités d'alimentation 5. Celles-ci utilisent la tension de ligne Vl et un courant Il circulant sur la ligne HTA pour fournir au modem une tension Valim et un courant Ialim. Le modem utilisé ici pour illustrer l'invention requiert une tension d'alimentation Valim = 12 Volt sous un courant Ialim de quelques centaines de milliampères.

La capacité de ligne 3 est tout d'abord utilisée pour fournir un courant d'entrée le aux unités d'alimentation 5. Comme toute capacité, la capacité de ligne 3 n'est pas un composant purement capacitif. Au contraire, elle peut être modélisée par une capacité parfaite associée à une résistance en série et une résistance en parallèle (ainsi qu'à une inductance en série qui n'apparaît qu'à haute fréquence). La résistance parallèle, appelée résistance d'isolement ou de fuite, qui a pour valeur la résistance mesurée entre les bornes de la capacité sous tension continue, génère un courant de fuite. Ainsi, cette capacité de ligne 3 connectée à la ligne HTA 1 forme un générateur de courant pouvant fournir les quelques milliampères nécessaires à l'entrée du dispositif d'alimentation du modem 4.

La capacité de ligne 3 est aussi utilisée pour fournir une tension d'entrée Ve à chaque unité d'alimentation. Cette tension d'entrée Ve est obtenue en divisant la tension de la ligne HTA. Pour cela, chaque unité d'alimentation comporte un composant frontal, ici une capacité d'entrée 16. La capacité de ligne 3 et les capacités d'entrée 16 des unités d'alimentation 5 sont reliées en série le long sur la ligne additionnelle. On créé donc ainsi une chaîne 17 de capacités d'entrée et donc d'unités d'alimentation 5 sur la ligne additionnelle 2. La capacité de ligne 3 et les capacités d'entrée 16 forment un diviseur de tension capacitif qui permet d'imposer une tension d'entrée Ve à l'entrée de chacune des unités d'alimentation 1. La valeur de la tension d'entrée Ve dépend de la tension de ligne et des valeurs de la capacité de ligne 3 et des capacités d'entrée 16. Chaque unité d'alimentation fournit en sortie un courant Is et une tension Vs aux bornes d'une sortie de potentiel haut Sh et d'une sortie de potentiel bas Sb. La sortie de potentiel bas Sb de chaque unité d'alimentation 5 est reliée à la sortie de potentiel haut Sh de l'unité 5 lui succédant dans la chaîne d'unité d'alimentation 17 (à l'exception de la dernière unité 5d de la chaîne dont la sortie Sb est connectée à une masse électrique). Il est ainsi obtenu une tension Valim égale à la somme des tensions de sortie Vs de chaque unité d'alimentation et un courant d'alimentation Ialim égal au courant Is.

Avantageusement, on choisit les valeurs des capacités d'entrée 16 pour que celles-ci présentent une impédance réduite dans la bande de fréquence du signal [30 kHz ; 95 kHz], ce qui permet d'optimiser le couplage entre le modem 4 et la ligne HTA 1. Ainsi, en choisissant par exemple une valeur de capacité de ligne 3 égale à 1500 picofarads et une valeur des capacités d'entrée 16 égale à 20 nanofarads, on obtient une impédance équivalente d'environ 1750 ohms pour la capacité de ligne 3 et 133 ohms pour les capacités d'entrée 16 à une fréquence de 60 kHz au centre de la bande [30 kHz ; 95 kHz]. L'impédance équivalente des capacités d'entrée 16 est très faible au regard de l'impédance de la capacité de ligne 3, ce qui permet de transmettre le signal du modem 4 avec une atténuation limitée.

Ici, chaque unité d'alimentation 5 fournit en sortie une tension Vs = 3 Volts. La tension Valim est donc égale à 12 Volts et permet d'alimenter le modem 4.

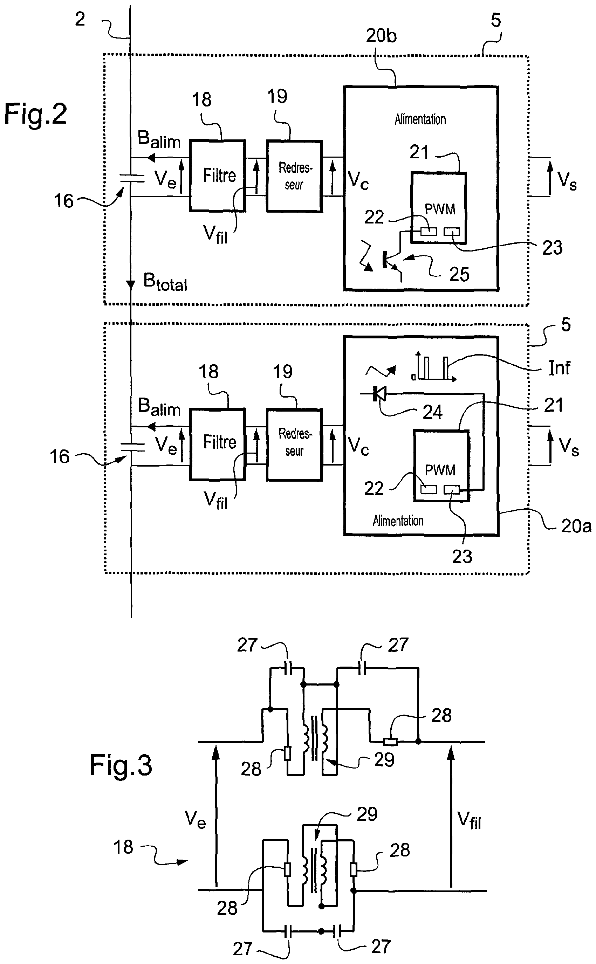

Chaque unité d'alimentation 5 comporte une cellule de filtrage 18, une cellule redresseuse 19 et une cellule d'alimentation à découpage 20. Cette cellule d'alimentation 20 est de type Flyback et comporte un module d'horloge, ici un contrôleur à modulation de largeur d'impulsions 21 (PWM pour Pulse-Width Modulation, visible à la figure 2). Le contrôleur PWM 21 hache à une fréquence f élevée une tension continue Vc fournie par la cellule redresseuse de manière à produire des impulsions d'une certaine largeur de laquelle dépend la valeur de sortie Vs. La largeur de ces impulsions est asservie à la valeur de la tension de sortie Vs pour réguler cette tension.

Le fonctionnement du contrôleur PWM 21 génère un signal d'horloge, ici un bruit d'alimentation Balim de fréquence f et de phase ϕ, qui se propage à partir de la cellule d'alimentation 20 vers la ligne additionnelle. Ce bruit dégrade le courant Ire et vient perturber la réception du signal de données par l'étage récepteur 8 du modem 4.

Pour limiter l'occupation spectrale de ce bruit Balim, on prévoit de synchroniser en fréquence et en phase les contrôleurs PWM 21 (ceux-ci sont donc des contrôleurs de type synchronisable), de manière à ce que la fréquence et la phase du bruit que chacun des contrôleurs génère soient sensiblement identiques à la fréquence et à la phase du bruit engendré par les autres contrôleurs. Chaque contrôleur PWM 21 comprend une entrée de synchronisation 22 et une sortie de synchronisation 23. La synchronisation s'effectue par transmission de la fréquence f et de la phase ϕ d'une cellule d'alimentation 20a, dite « cellule maître » vers les autres cellules d'alimentation 20b. Pour transmettre les informations de fréquence f et de phase ϕ, chaque cellule d'alimentation est munie d'un composant photocoupleur comportant une diode d'émission 24 pour transmettre les données, et un phototransistor 25 pour les recevoir. Ainsi, la cellule d'alimentation maître 20a émet une information Inf contenant la fréquence f et la phase ϕ à partir de la diode d'émission 24 connectée à la sortie de synchronisation 23 du contrôleur PWM 21. Cette information est reçue par le phototransistor 25 connecté à l'entrée de synchronisation 22 du contrôleur PWM 21 de la cellule esclave 20b.

Ainsi, les cellules d'alimentation 20 produisent un bruit d'alimentation Balim de fréquence f et de phase ϕ sensiblement égales les unes aux autres. Pour réduire ce bruit Balim, on prévoit tout d'abord d'utiliser la cellule de filtrage 18 (visible en détail à la figure 3) connectée en parallèle à la capacité d'entrée 16 pour transformer la tension d'entrée Ve en une tension filtrée Vfil. Cette cellule de filtrage 18 doit être réalisée de manière à filtrer autant que possible le bruit d'alimentation Balim dans la bande de fréquence du signal de données [30 kHz ; 95 kHz]. Pour cela, outre des capacités de filtrage 27 et des résistances de filtrage 28, on utilise en mode différentiel deux inductances mode commun 29 identiques, qui apportent une atténuation importante au bruit d'alimentation Balim dans la bande de fréquence du signal. Cette cellule de filtrage 18 a aussi pour fonction d'éliminer des perturbations électromagnétiques provenant de la ligne HTA 1 via la ligne additionnelle 2 car de telles perturbations pourraient dégrader le fonctionnement de la cellule d'alimentation 20 ou du modem 4. La cellule de filtrage a donc pour particularité, outre l'emploi original de l'inductance mode commun pour réaliser un filtrage différentiel, de filtrer à la fois un signal Balim circulant de la cellule d'alimentation 20 vers la ligne additionnelle 2, et un signal qui correspond aux perturbations électromagnétiques et qui circule dans l'autre sens.

Pour améliorer l'atténuation du bruit d'alimentation total Btotal qui circule sur la ligne additionnelle 2 et qui résulte des bruits d'alimentation Balim provenant des différentes unités d'alimentations 5, on prévoit en outre d'injecter sur la ligne additionnelle un signal de suppression de bruit Suppr égal à l'opposé du bruit d'alimentation total Btotal, c'est-à-dire un signal de fréquence f, de phase - ϕ, et d'amplitude égale à la somme des amplitudes des bruits d'alimentation Balim provenant des quatre unités d'alimentation 5. La résultante de la superposition du signal de suppression de bruit Suppr et du bruit d'alimentation total Btotal est presque nulle. Pour générer le signal de suppression de bruit Suppr, on connecte l'étage amplificateur 15 en parallèle d'une capacité d'entrée 16 d'une unité d'alimentation 5d. L'étage amplificateur 15 amplifie alors le bruit d'alimentation Balim provenant de cette unité d'alimentation puis modifie sa phase pour générer le signal de suppression du bruit Suppr. Le signal de suppression du bruit Suppr est alors injecté sur la ligne additionnelle 2 via le second transformateur 12. L'étage amplificateur 15 et le second transformateur 12 sont donc ici des moyens d'injection de bruit.

On commande l'étage amplificateur 15 de façon différente selon que le modem est en émission ou en réception. Lorsque le modem fonctionne en réception, l'unité de traitement du signal 6 commande l'étage amplificateur 15 pour injecter le signal de suppression de bruit Suppr sur la ligne additionnelle 2. Lorsque le modem fonctionne en émission, le signal de suppression de bruit Suppr n'est pas injecté. La sortie de l'étage amplificateur 15 est alors portée à faible impédance pour ne pas perturber l'émission du signal de données.

L'invention n'est pas limitée au mode de réalisation particulier qui vient d'être décrit, mais, bien au contraire, couvre toute variante entrant dans le cadre de l'invention telle que définie par les revendications.

L'ensemble des valeurs numériques utilisées, ainsi que le nombre d'unités d'alimentation, ne sont fournis qu'à titre d'exemple, pour illustrer l'invention.

Bien que l'on ait choisi d'illustrer l'invention avec une application CPL bas débit, le dispositif de l'invention peut bien sûr être utilisé dans une application CPL haut débit.

Bien que l'on ait choisi de coupler la ligne HTA à la ligne additionnelle avec une capacité, et d'utiliser cette capacité pour former un pont diviseur capacitif avec des capacités d'entrée des unités d'alimentation, il est possible d'utiliser des résistances à la place de ces capacités. On forme alors un pont diviseur résistif.

Bien que l'on ait choisit de coupler le modem à une ligne HTA, il est possible de coupler ce modem à tout type de ligne électrique (haute tension, moyenne tension, basse tension), et plus généralement, à tout canal de transmission sur lequel circule un courant électrique suffisant pour alimenter le modem.

Il est aussi possible de prévoir d'intégrer une unité d'alimentation directement dans le modem.

## Revendications

1. Dispositif de modulation-démodulation destiné à émettre et recevoir des données sur un canal de transmission (1) sur un réseau électrique, le dispositif étant connecté au canal de transmission (1) par une ligne additionnelle (2), le dispositif comportant une unité de traitement de signal (6) reliée à au moins une unité d'alimentation (5) et à des moyens de couplage (3, 16, 18) entre l'unité de traitement du signal (6) et le canal de transmission (1), les données circulant via les moyens de couplage, **caractérisé en ce que** les moyens de couplage (3, 16, 18) comprennent un étage d'entrée (16, 18) de l'unité d'alimentation (5).

2. Dispositif de modulation-démodulation selon la revendication 1, dans lequel l'étage d'entrée (16, 18) de l'unité d'alimentation (5) comporte un composant frontal (16) connectant l'unité d'alimentation (5) au canal de transmission (1) via un composant de ligne (3) connecté au canal de transmission (1), le composant de ligne (3) et le composant frontal (16) étant connectés en série sur la ligne additionnelle (2).

3. Dispositif de modulation-démodulation selon la revendication 2, dans lequel le composant frontal (16) est une capacité d'entrée (16) de l'étage d'entrée (16, 18) de l'unité d'alimentation (5) et le composant de ligne (3) une capacité reliée au canal de transmission (1) .

4. Dispositif de modulation-démodulation selon la revendication 1, dans lequel l'unité d'alimentation (5) comporte au moins une cellule d'alimentation (20) à découpage.

5. Dispositif de modulation-démodulation selon la revendication 4, dans lequel l'étage d'entrée (16, 18) de l'unité d'alimentation comprend une cellule de filtrage (18) pour filtrer un bruit d'alimentation provenant de la cellule d'alimentation (20) à découpage.

6. Dispositif de modulation-démodulation selon la revendication 5, dans lequel la cellule de filtrage (18) comporte des moyens de filtrage différentiel (27, 28, 29) comprenant au moins une inductance mode commun (29).

7. Dispositif de modulation-démodulation selon la revendication 4, comprenant au moins deux unités d'alimentation (5), dans lequel les cellules d'alimentation (20) à découpage comportent un module d'horloge (21) émettant un signal d'horloge, chaque module d'horloge (21) étant synchronisé avec les modules d'horloge (21) des autres cellules d'alimentation (20) pour que les signaux d'horloge aient une fréquence et une phase sensiblement identiques.

8. Dispositif de modulation-démodulation selon la revendication 7, dans lequel la synchronisation est réalisée par des composants photocoupleurs (24, 25).

9. Dispositif de modulation-démodulation selon la revendication 7, dans lequel le module d'horloge (21) est un contrôleur PWM.

10. Dispositif de modulation-démodulation selon la revendication 4, dans lequel l'unité de traitement (6) est reliée à des moyens d'injection de bruit (12, 15) pour injecter sur la ligne additionnelle (2) un signal (Suppr) opposé à un bruit d'alimentation (Balim) provenant de la cellule d'alimentation (20) à découpage.

11. Dispositif de modulation-démodulation selon la revendication 10, dans lequel les moyens d'injection de bruit (12, 15) comportent un étage amplificateur (15) pour amplifier le bruit d'alimentation et un transformateur (12) à enroulements (13, 14) connectant l'unité de traitement (6) à la ligne additionnelle (2) pour injecter le signal (Suppr) opposé au bruit d'alimentation.

## Patentansprüche

1. Modulations-Demodulations-Vorrichtung, die dazu bestimmt ist, Daten auf einem Übertragungskanal (1) auf einem elektrischen Netzwerk zu senden und zu empfangen, wobei die Vorrichtung mit dem Übertragungskanal (1) über eine zusätzliche Leitung (2) verbunden ist, wobei die Vorrichtung eine Signalverarbeitungseinheit (6) umfasst, die mit mindestens einer Versorgungseinheit (5) und mit Kopplungsmitteln (3, 16, 18) zwischen der Signalverarbeitungseinheit (6) und dem Übertragungskanal (1) verbunden ist, wobei die Daten über die Kopplungsmittel zirkulieren, **dadurch gekennzeichnet, dass** die Kopplungsmittel (3, 16, 18) eine Eingangsstufe (16, 18) der Versorgungseinheit (5) umfassen.

2. Modulations-Demodulations-Vorrichtung nach Anspruch 1, bei der die Eingangsstufe (16, 18) der Versorgungseinheit (5) eine Front-Komponente (16) umfasst, die die Versorgungseinheit (5) mit dem Übertragungskanal (1) über eine mit dem Übertragungskanal (1) verbundene Leitungskomponente (3) verbindet, wobei die Leitungskomponente (3) und die Front-Komponente (16) auf der zusätzlichen Leitung (2) in Reihe geschaltet sind.

3. Modulations-Demodulations-Vorrichtung nach Anspruch 2, bei der die Front-Komponente (16) eine Eingangskapazität (16) der Eingangsstufe (16, 18) der Versorgungseinheit (5) und die Leitungskomponente (3) eine mit dem Übertragungskanal (1) verbundene Kapazität ist.

4. Modulations-Demodulations-Vorrichtung nach Anspruch 1, bei der die Versorgungseinheit (5) mindestens eine Schaltnetzteil-Zelle (20) umfasst.

5. Modulations-Demodulations-Vorrichtung nach Anspruch 4, bei der die Eingangsstufe (16, 18) der Versorgungseinheit eine Filter-Zelle (18) zum Filtern eines Versorgungsrauschens umfasst, das aus der Schaltnetzteil-Zelle (20) stammt.

6. Modulations-Demodulations-Vorrichtung nach Anspruch 5, bei der die Filter-Zelle (18) Differentialfiltermittel (27, 28, 29) umfasst, die mindestens eine Gleichtakt-Induktanz (29) umfassen.

7. Modulations-Demodulations-Vorrichtung nach Anspruch 4, umfassend mindestens zwei Versorgungseinheiten (5), bei der die Schaltnetzteil-Zellen (20) ein Taktmodul (21) umfassen, das ein Taktsignal aussendet, wobei jedes Taktmodul (21) mit den Taktmodulen (21) der anderen Schaltnetzteil-Zellen (20) synchronisiert ist, damit die Taktsignale eine im Wesentlichen identische Frequenz und eine im Wesentlichen identische Phase haben.

8. Modulations-Demodulations-Vorrichtung nach Anspruch 7, bei der die Synchronisation durch Photokoppler-Komponenten (24, 25) erfolgt.

9. Modulations-Demodulations-Vorrichtung nach Anspruch 7, bei der das Taktmodul (21) ein PBM-Regler ist.

10. Modulations-Demodulations-Vorrichtung nach Anspruch 4, bei der die Verarbeitungseinheit (6) mit Rauscheinkopplungsmitteln (12, 15) verbunden ist, um auf die zusätzliche Leitung (2) ein Signal (Suppr) einzukoppeln, das dem Versorgungsrauschen (Balim), das aus der Schaltnetzteil-Zelle (20) stammt, entgegengesetzt ist.

11. Modulations-Demodulations-Vorrichtung nach Anspruch 10, bei der die Rauscheinkopplungsmittel (12, 15) eine Verstärkungsstufe (15) umfassen, um das Versorgungsrauschen zu verstärken, sowie einen Transformator (12) mit Wicklungen (13, 14), der die Verarbeitungseinheit (6) mit der zusätzlichen Leitung (2) verbindet, um das dem Versorgungsrauschen entgegengesetzte Signal (Suppr) einzukoppeln.

## Claims

1. A modulator/demodulator device for sending and receiving data over a transmission channel (1) on an electricity network, the device being connected to the transmission channel (1) by an additional line (2), the device including a signal processor unit (6) connected to at least one power supply unit (5) and to coupling means (3, 16, 18) providing coupling between the signal processor unit (6) and the transmission channel (1), the data traveling via the coupling means, the device being **characterized in that** the coupling means (3, 16, 18) comprise an input stage (16, 18) of the power supply unit (5) .

2. A modulator/demodulator device according to claim 1, wherein the input stage (16, 18) of the power supply unit (5) includes a front component (16) connecting the power supply unit (5) of the transmission channel (1) via a line component (3) connected to the transmission channel (1), the line component (3) and the front component (16) being connected in series in the additional line (2).

3. A modulator/demodulator device according to claim 2, wherein the front component (16) is an input capacitor (16) of the input stage (16, 18) of the power supply unit (5), and the line component (3) is a capacitor connected to the transmission channel (1).

4. A modulator/demodulator device according to claim 1, wherein the power supply unit (5) includes at least one switch mode power supply cell (20).

5. A modulator/demodulator device according to claim 4, wherein the input stage (16, 18) of the power supply unit includes a filter cell (18) for filtering power supply noise coming from the switch mode power supply cell (20).

6. A modulator/demodulator device according to claim 5, wherein the filter cell (18) comprises differential filter means (27, 28, 29) including at least one common mode inductor (29).

7. A modulator/demodulator device according to claim 4, including at least two power supply units (5), wherein each switch mode power supply cell (20) includes a clock module (21) issuing a clock signal, each clock module (21) being synchronized with the clock modules (21) of the other power supply cells (20) so that the clock signals have frequency and phase that are substantially identical.

8. A modulator/demodulator device according to claim 7, wherein synchronization is performed by photocoupler components (24, 25).

9. A modulator/demodulator device according to claim 7, wherein the clock module (21) is a PWM controller.

10. A modulator/demodulator device according to claim 4, wherein the processor unit (6) is connected to noise injection means (12, 15) to inject a signal (Suppr) into the additional line (2), which signal is opposite to power supply noise (Balim) coming from the switch mode power supply cell (20).

11. A modulator/demodulator device according to claim 10, wherein the noise injector means (12, 15) comprise an amplifier stage (15) for amplifying the power supply noise and a transformer (12) having windings (13, 14) connecting the processor unit (6) to the additional line (2) in order to inject the signal (Suppr) opposite to the power supply noise.
